# EUROPEAN PATENT APPLICATION

(11) **EP 4 491 071 A1**
(43) Date of publication of application: **15.01.2025**
(21) Application number: 24187954.3
(22) Date of filing: 11.07.2024
(51) Int. Cl.: A47J 31/36, A47J 31/44

(54) **COFFEE MACHINE**

(30) Priority: 12.07.2023 IT 202300014634
(71) Applicant: Cimbali Group S.p.A., 20082 Binasco (MI) (IT)
(72) Inventor: Coccia, Andrea, 20082 Binasco MI (IT); Bianchi, Claudio, 20028 S. Vittore Olona MI (IT)
(74) Representative: Perani & Partners S.p.A.

(57) **Abstract**

Coffee machine (1) comprising a dispensing unit (2) and a filter holder (3), wherein: - the filter holder (3) is switchable between a dispensing configuration in which is engaged with the dispensing unit (2) and a rest configuration in which is disengaged from the dispensing unit (2), the dispensing unit (2) comprises a dispensing body (4) configured to supply water to the filter holder (3), a gasket (5) configured to hermetically couple the filter holder (3) to the dispensing body (4),an annular element (6) switchable between an operating configuration in which it is fixed to the dispensing body (4) engaging the gasket (5) and a maintenance configuration in which it is disassembled from the dispensing body (4) disengaging the gasket (5), in the operating configuration the annular element (6) makes a seat (7) with the dispensing body (4), the seat (7) extending along an axial direction (X-X) and being adapted to accommodate the filter holder (3) in the dispensing configuration, coupling members (8) configured to fix the annular element (6) to the dispensing body (4) and comprising first coupling elements (9) adapted to constrain the annular element (6) to the dispensing body (4) along the axial direction (X-X) and allow the rotation of the annular element (6) with respect to the dispensing body around the axial direction (X-X),second coupling elements (10) adapted to constrain the rotation of the annular element (6) with respect to the dispensing body (4) around the axial direction (X-X) in a determined angular position to the switching of the filter holder (3) between the dispensing and rest configuration.

## Description

### Technical Field

The present invention relates to a coffee machine, in particular an espresso coffee machine for professional use, which finds useful application in bars, restaurants, canteens, and similar public or private establishments.

### State of the art

Traditional professional coffee machines comprise one or more dispensing units to which respective infusion units are removably engageable.

The infusion units, commonly called "filter holders", have a cup-shaped body in which a filter is inserted to hold a determined dose of ground coffee, and a pair of fins projecting towards the outside of the cup-shaped body.

The dispensing units instead have a dispensing body, a sealing gasket mounted on the dispensing body, and an annular element engageable to the dispensing body.

The annular element, which in the Italian technical jargon is referred to as the "campana", is configured to allow the coupling of the filter holder to the dispensing unit by means of a pair of helical guides configured to guide the fins of the filter holder during the tightening or loosening operations of the filter holder on the dispensing unit.

In use, for coupling the filter holder to the dispensing unit, the operator inserts the fins into special lead-ins for the helical guides of the annular element and imparts a rotary clamping motion to the filter holder. The helical shape of the guides converts the rotary impulse of the operator into an upward roto-translational motion of the filter which, in doing so, abuts against the sealing gasket and makes a watertight connection with the dispensing body.

When the dispensing phase is completed, to release the filter holder from the dispensing unit, the operator imparts a loosening rotary motion on the filter holder which, due to the helical shape of the guides, moves in a roto-translational motion downwards, disengaging first from the sealing gasket and then from the dispensing unit.

To prevent accidental uncoupling of the filter holder from the dispensing unit or unwanted water leakage during dispensing, the operator applies significant tightening torques during the operation of coupling the filter holder to the dispensing unit. Typically, the tightening torques are between 15-25 Nm.

Such clamping torques cause significant forced couplings between the upper edge of the filter and the sealing gasket which, in the long run, will wear out and require replacement.

The wear process of the sealing gasket is also accelerated by the high temperatures which the dispensing unit is cyclically brought to during dispensing. It is in fact known that, at such high temperatures, the gasket material tends to dry out and lose its elastic properties, thus accelerating the wear process generated by the tangential stresses resulting from the tightening and loosening operations of the filter holder to the dispensing unit.

The wear of the sealing gasket is also emphasized by the contact with the infusion since, between one dispensing and the next, the liquid coffee remaining on the edges of the gasket quickly evaporates, transforming into an abrasive powder that, by friction, wears the sealing gasket when the filter holder is next coupled to the gasket.

It should be noted that, during operations of replacing the gasket, to have access to the latter, it is first necessary to disengage the annular element from the dispensing body.

It is therefore evidently important that the annular element can be easily and quickly coupled and uncoupled from the dispensing body, so as to minimize machine downtime.

However, disadvantageously, known coffee machines are not able to guarantee this because in the known coffee machined the annular element is fixed to the dispensing body by means of a plurality of screws arranged in circular succession on which the operator must intervene individually with special tools to loosen and tighten them.

The operation of replacing the gasket is also complicated by the fact that some of the screws - such as, for example, those placed between the dispensing unit and the machine frame - are arranged in positions that are not easily accessible with the clamping/loosening tool.

The laboriousness of this maintenance operation is also emphasized by the fact that the annular element is at high temperatures, which requires the operator to wear thermal gloves that do not adapt to the manual dexterity required to remove the mounting screws of the annular element on the dispensing body.

In conclusion, the use of a plurality of screws for fixing the annular element to the dispensing body is not compatible with the practicality and speed of replacing the sealing gasket required by the circumstances.

### Object of the invention

In this context, the technical task underlying the present invention is to propose a coffee machine which overcomes the drawbacks of the prior art mentioned above.

In particular, it is an object of the present invention to make available a coffee machine capable of simplifying and speeding up the replacing operations of the sealing gasket of the dispensing unit.

It is also an object of the present invention to make available a coffee machine capable of reducing machine downtime due to maintenance operations, so as to maximize the availability of the coffee machine.

A further object of the present invention is to make available a coffee machine having a coupling of the annular element to the dispensing body that is an alternative to those known in the state of the art.

### SUMMARY OF THE INVENTION

The specified technical task and the specified objects are substantially achieved by a coffee machine in accordance with the present invention.

In particular, the present invention proposes coupling the annular element to the dispensing body by means of coupling members comprising first and second coupling elements which, unlike the screws used in the known machines, create different constraints.

In particular, the first coupling elements are configured to constrain the annular element to the dispensing body along the axial direction and allow the rotation of the annular element with respect to the dispensing body around the axial direction.

In contrast, the second coupling elements are configured to constrain the rotation of the annular element with respect to the dispensing body around the axial direction.

It should be noted that the constraints achieved by the first and second coupling elements, in addition to allowing a stable anchoring of the annular element to the dispensing body, are able to facilitate and speed up the disengagement/engagement operations of the annular element from the dispensing body.

In the present invention, to switch the annular element between an operating configuration in which it is fixed to the dispensing body engaging the gasket and a maintenance configuration in which it is disassembled from the dispensing body and disengages the gasket, it is sufficient for the operator to uncouple/couple the second coupling elements and rotate the annular element.

Therefore, the coupling members according to the present invention make it possible to avoid the use of multiple screws on which the operator must act individually to uncouple/couple the annular element from/to the dispensing body.

### LIST OF FIGURES

Further features and advantages of the present invention will become more apparent from the exemplary, and therefore non-limiting, description of a coffee machine, as illustrated in the appended drawings, in which:
- Figure 1 shows a front view of a coffee machine according to the present invention,
- Figure 2 shows an exploded perspective view of the filter holder of the coffee machine of Figure 1,
- Figure 3 shows an exploded perspective view of a dispensing unit of the coffee machine of Figure 1,
- Figure 4 shows a perspective view of a component of the dispensing unit of Figure 3;
- Figure 5 shows a cross-sectional view of the components of the dispensing unit of Figure 3,
- Figure 6 shows a sectional perspective view of the dispensing unit of Figure 3 in an operating configuration,
- Figure 7 shows a sectional side view of the dispensing unit of Figure 3 in an operating configuration.

### DETAILED DESCRIPTION

With reference to the accompanying figures, the present invention relates to a coffee machine 1, in particular a professional espresso coffee machine, configured to dispense coffee-flavoured beverages.

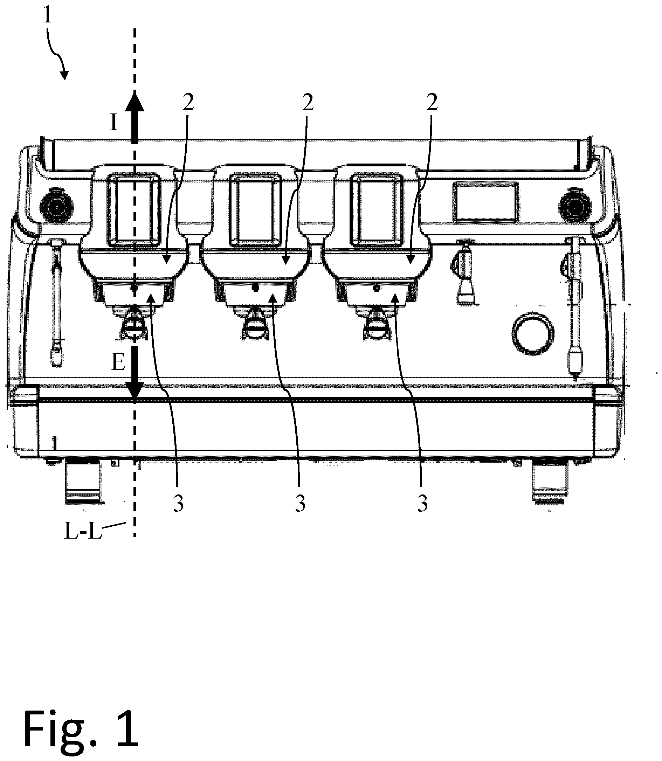

With reference to the embodiment shown in Figure 1, preferably, the machine 1 is provided with a plurality of dispensing units 2.

For the sake of simplicity, reference will be made below to only one of the dispensing units 2, it being understood that the characteristics set forth will be equally applicable to each dispensing unit of the machine 1.

The machine 1 therefore comprises a dispensing unit 2, and a filter holder 3 removably engageable to the dispensing unit 2.

The filter holder 3 is switchable between a dispensing configuration in which it is engaged with the dispensing unit 2 and a rest configuration in which it is disengaged from the dispensing unit 2. In the dispensing configuration, the filter holder 3 is coupled to the dispensing unit 2 that holds it in position during dispensing; otherwise, in the rest configuration, the filter holder 3 is released from the dispensing unit 2 to allow the operator of the coffee machine to perform the common operations of removing the spent coffee puck and refilling.

With reference to Figure 1, it should be specified that the filter holder 3 is couplable to the dispensing unit 2 along a longitudinal direction L-L in an insertion direction I, and can be extracted from the dispensing unit along the same longitudinal direction L-L in an extraction direction E, opposite to the insertion direction I.

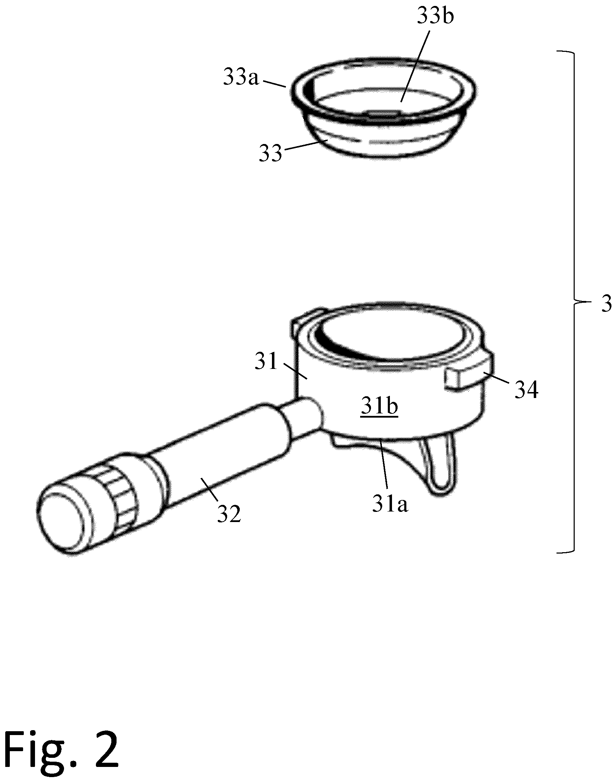

According to an aspect shown in Figure 2, the filter holder 3 comprises a cup-shaped body 31 connected to a handle 32 that allows its movement. The cup-shaped body 31 is delimited at the bottom by a closed bottom 31a provided with a dispensing spout and laterally by a side wall 31b having a frustoconical/cylindrical shape.

The filter holder 3 also comprises a filter 33 inserted in the cup-shaped body 31 and configured to contain a predetermined dose of ground coffee. In detail, the filter 33 is inserted into the cup-shaped body 31 between the closed bottom 31a and the side wall 31b.

The filter holder 3 also comprises a pair of fins 34 projecting from the cup-shaped body 31 and configured to allow coupling of the filter holder 3 to the dispensing unit 2. In detail, these fins 34 are opposite and projecting radially from the side wall 31b.

In the dispensing configuration the fins 34 are engaged in the dispensing unit 2, particularly in an annular element 6 of the dispensing unit 2, for arranging and fixing the filter holder 3 in the dispensing unit 2. More details on the annular element 6 and on the anchoring of the filter holder 3 to the latter will be provided in a subsequent part of the description.

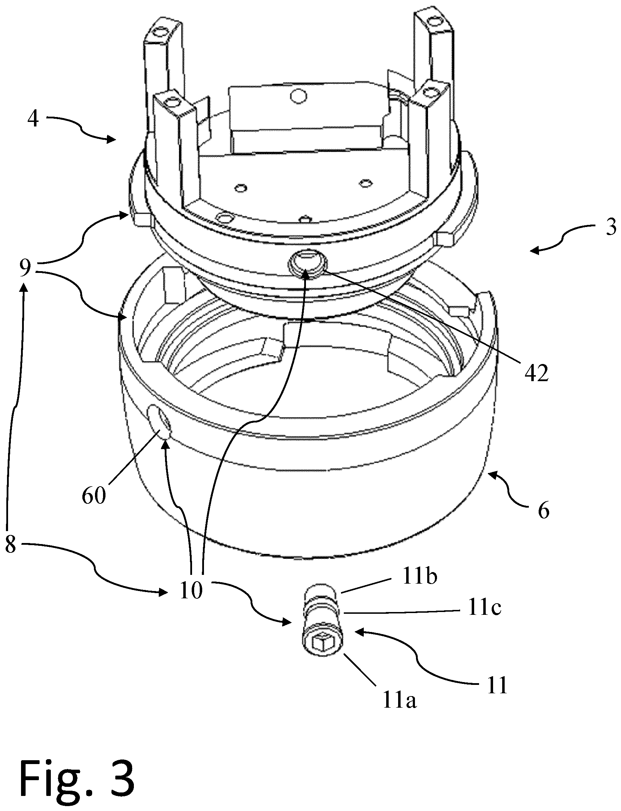

Referring to Figures 3 and 5-7, the dispensing unit 2 comprises a dispensing body 4 configured to supply water to the filter holder 3 when the latter is in the dispensing configuration.

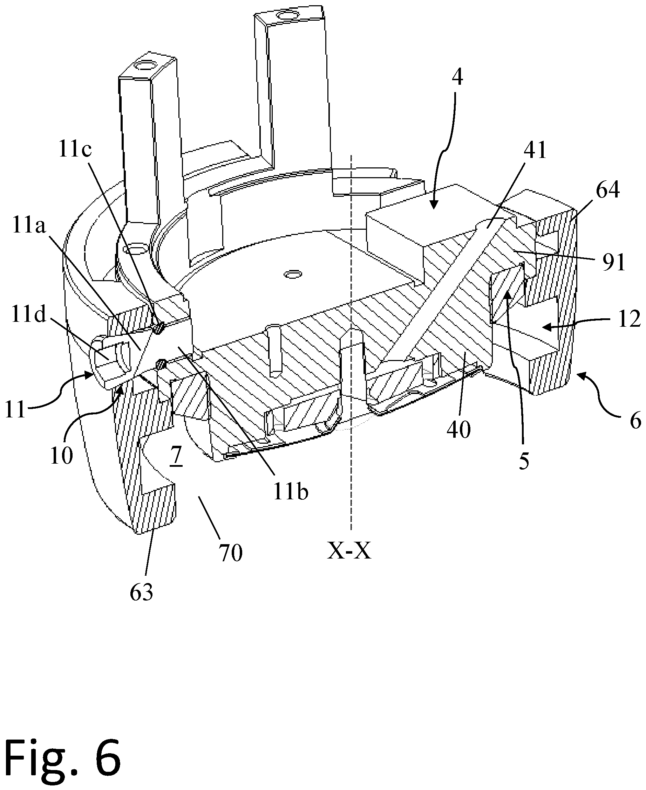

According to an aspect shown in Figure 6, the dispensing body 4 has a cylindrical portion 40 in which a supply channel 41 is formed. The supply channel 41 is placed in fluid communication with supply means (not shown in the figures) which are configured to generate a pressurized flow of water in the supply channel 41. During dispensing, the supply means supply water to the filter holder in dispensing configuration through the supply channel 41 to wet the dose of ground coffee contained in the filter 33.

The dispensing unit 2 also comprises a sealing gasket 5 configured to hermetically couple the filter holder 3 to the dispensing body 4 when the filter holder 3 is in the dispensing configuration.

The gasket 5 is mounted on the dispensing body 4 so that, when the filter is in the dispensing configuration, the gasket 5 abuts against an upper edge 33a or an inner portion 33b of the filter 33.

With reference to the embodiment of Figure 6, preferably, the gasket 5 has an annular shape and is configured to be fitted on the cylindrical portion 40 of the dispensing body 4.

The dispensing unit 2 also comprises an annular element 6 configured to connect the filter holder 3 to the dispensing body 4, when the filter holder 3 is in the dispensing configuration. In other words, the annular element 6 is configured to connect the filter holder 3 in the dispensing configuration to the dispensing body 4.

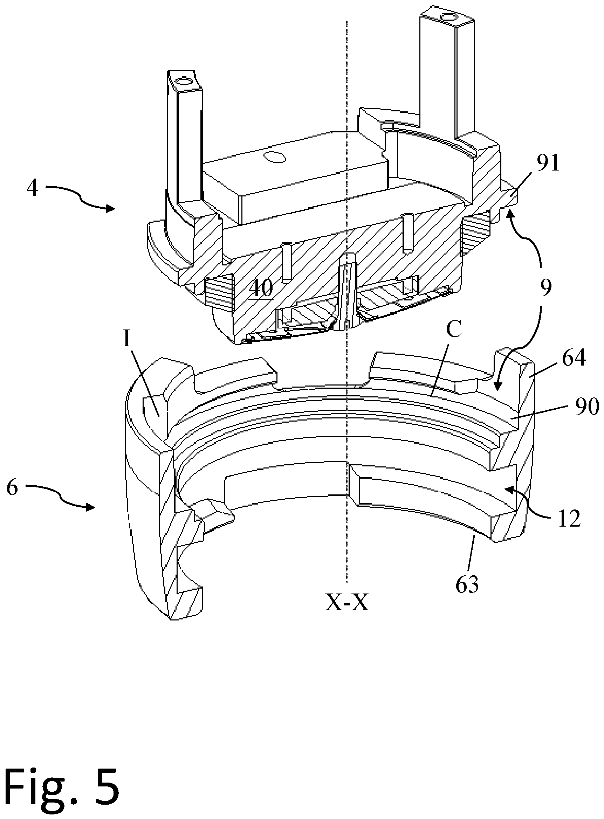

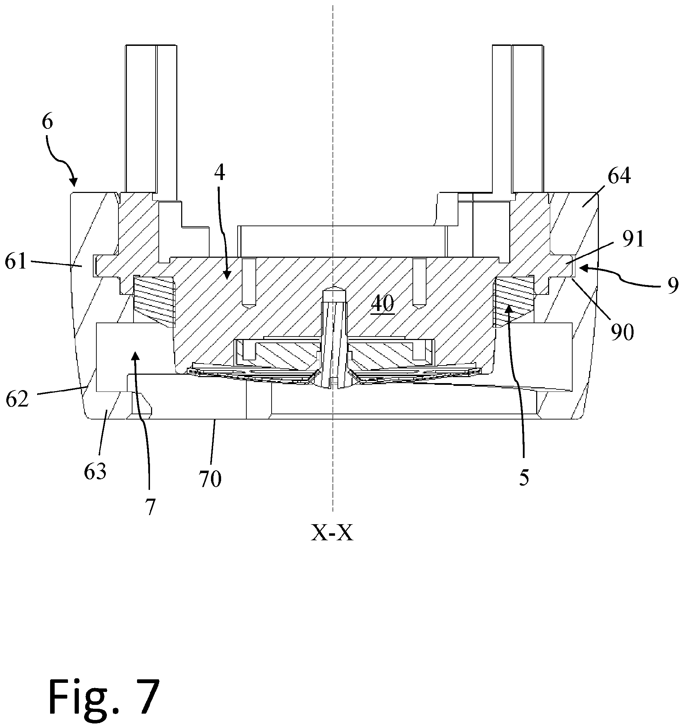

This annular element 6 is configured to switch between an operating configuration in which it is fixed to the dispensing body 4 engaging the gasket 5 (Figures 6 and 7), and a maintenance configuration in which it is disassembled from the dispensing body 4 disengaging the gasket 5 (Figure 5).

In the operating configuration, the annular element 6 makes a seat 7 with the dispensing body 4, the seat 7 extending along an axial direction X-X and in which the gasket 5 is housed.

Preferably, when the annular element 6 is in operating configuration, the gasket 5 is interposed between the dispensing body 4, in particular its cylindrical portion 40, and the annular element 6.

Furthermore, preferably, the axial direction X-X coincides with the longitudinal direction L-L, i.e. the seat 7 extends along the insertion/extraction direction of the filter holder 3 in/from the dispensing unit 2.

The seat 7 has an access opening 70 opposite to the dispensing body 4 and configured to allow the insertion of at least part of the filter holder 3 in the seat 7. This access opening 70 extends transversely, in particular perpendicularly, to the longitudinal direction L-L along which the filter holder 3 is insertable/extractable in the seat 7.

Preferably, the access opening 70 is defined by the annular element 6, in particular by a lower edge 63 thereof.

In the operating configuration shown in the embodiment of Figures 6 and 7, the annular element 6 is mounted on the cylindrical portion 40 of the dispensing body 4.

In particular, preferably, the annular element 6 has an upper edge 64 which, when the annular element 6 is in the operating configuration, is configured to be fitted on the cylindrical portion 40 of the dispensing body 4.

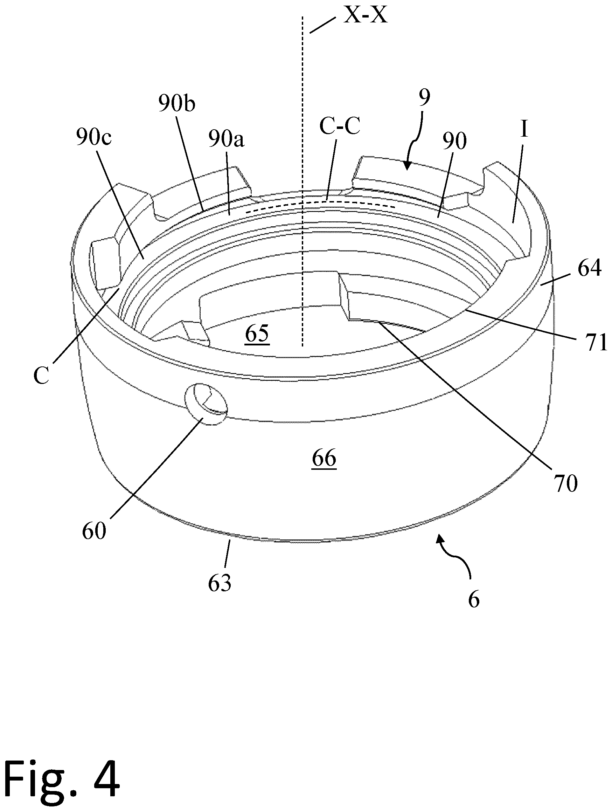

Referring to Figure 4, preferably, the annular element 6 has an inner cavity 65 extending along the axial direction X-X between the lower edge 63 and the upper edge 64.

When the annular element 6 is in the maintenance configuration, the cavity 65 is accessible from opposite sides along the axial direction X-X by means of the aforementioned access opening 70 defined by the lower edge 64, and by means of a coupling opening 71 defined by the upper edge 65.

It should be specified that when the annular element 6 is in the operating configuration, the coupling opening 71 is closed by the dispensing body 4 to make the seat 7.

Preferably, the cylindrical portion 40 of the dispensing body 4 is configured to be at least partially inserted into the coupling opening 71, when the annular element 6 is in the operating configuration.

More preferably, the cylindrical portion 40 of the dispensing body 4 is configured to be at least partially concentrically inserted into the annular element 6 along the axial direction X-X realizing a concentricity constraint. It should be noted that in this way, in the operating configuration, the cylindrical portion 40 retains the annular element 6 along directions transverse, in particular radial, to the axial direction X-X. In addition, in this way, the cylindrical portion 40 inhibits relative rotational motions between the dispensing body 4 and the annular element 6 except for that around the axial direction X-X which is left free.

The dispensing unit 4 also comprises coupling members 8 configured to fix the annular element 6 to the dispensing body 4 in the operating configuration.

It should be specified that in the context of the present invention, the term "fixing" is intended to make two distinct bodies integral so that they cannot perform movements and rotations with respect to each other. Therefore, two bodies fixed to each other do not possess relative degrees of freedom.

The coupling members 8 comprise first and second coupling elements 9, 10 configured to create respective constraints between the annular element 6 and the dispensing body 4.

The first coupling elements 9 are configured to constrain the annular element 6 to the dispensing body 4 along the axial direction X-X but, at the same time, allow the rotation of the annular element 6 with respect to the dispensing body 4 around the axial direction X-X. Therefore, the first coupling elements 9 provide a constraining reaction to the forces that develop along the axial direction X-X between the filter holder 3 and the dispensing unit 2 when switching the filter holder 3 between the dispensing and rest configuration.

In contrast, the second coupling elements 10 are configured to constrain the rotation of the annular element 6 with respect to the dispensing body 4 around the axial direction X-X in a determined angular position upon the switching of the filter holder 3 between the dispensing configuration and the rest configuration. Therefore, the second coupling elements 10 provide a reaction to the tangential forces between the annular element 6 and the dispensing body 4 that are generated during the tightening/loosening of the filter holder 3 to/from the dispensing unit 2.

In the following, some possible embodiments of the first coupling elements 9 will first be explored, before moving on to those of the second coupling elements 10.

In the embodiment shown in Figures 3-5, the first coupling elements 9 comprise a guide 90 formed on the annular element 6 and having a circumferential section C extending around the axial direction X-X.

Preferably, the circumferential section C of the guide 90 extends 360° around the axial direction X-X along a circumferential direction C-C making, for example, a circular or helical path.

In addition, the guide 90 is preferably formed in an inner portion of the annular element 6 facing the cavity 65.

Still with reference to the embodiment of Figures 3-5, the first coupling elements 9 also comprise at least one slider element 91 obtained on the dispensing body 4 and configured to engage and slide in the guide 90, when the annular element 6 is in the operating configuration.

In detail, when the annular element 6 is in the operating configuration, the slider element 91 is engaged in the guide 90 which retains it in opposite directions along the axial direction X-X but allows it to slide around the latter along the circumferential direction C-C.

Preferably, the first coupling elements 9 comprise two slider elements 91 obtained on the dispensing body 4, in particular projecting radially from opposite sides of the cylindrical portion 40 (Figure 5).

Preferably, the circumferential section C of the guide 90 has two sliding surfaces 90a, 90b which are opposite each other and spaced apart from a gap 90c along the axial direction X-X. The at least one slider element 91 is configured to be arranged in said gap 90c so as to be retained by the sliding surfaces 90a, 90b along the axial direction X-X in opposite directions.

It is therefore evident that the circumferential section C of the guide 90 is configured to block the relative movement of the annular element 6 with respect to the dispensing body 4 along the axial direction X-X in both directions of movement.

According to an embodiment shown in Figures 4 and 5, the guide 90 comprises an insertion section I extending transversely to the circumferential section C and being connected to the latter.

This insertion section I acts as a lead-in to allow the at least one slider element 91 obtained on the dispensing body 4 to be introduced into the circumferential section C of the guide 90.

If, in accordance with the above, the first coupling elements 9 comprise a pair of slider elements 91, the guide 90 comprises two insertion sections I arranged on opposite portions of the annular element 40 and each of which is associated with a respective slider element 91.

Still with reference to Figures 4 and 5, preferably, the insertion section I extends along the axial direction from the upper edge 64 to the circumferential section C to which, in doing so, it is connected.

According to one embodiment, the coupling elements 9 make a bayonet connection between the annular element 6 and the dispensing body 4, in particular its cylindrical portion 40.

According to a further embodiment, the coupling elements 9 make a threaded connection between the annular element 6 and the dispensing body 4, in particular the cylindrical portion 40 of the dispensing body 4.

Referring to Figures 3 and 6, preferably, the second coupling elements 10 comprise a pin 11 configured to block the relative rotation of the annular element 6 with respect to the dispensing body about the axial direction X-X. Therefore, the pin 11 is configured to block the annular element 6 in a predetermined angular position with respect to the dispensing body 4.

In detail, when the annular element 6 is in the operating configuration, the pin 11 is arranged to extend transversely to the axial direction X-X engaging both the annular element 6 and the dispensing body 4.

Otherwise, when the annular element 6 is in the maintenance configuration, the pin 11 is disengaged from the annular element 6 and the dispensing body 4 which, therefore, are free to rotate with respect to each other around the axial direction X-X.

Therefore, in order to switch the annular element 6 between the operating configuration and the maintenance configuration, it is sufficient to change the arrangement of the pin 11 in accordance with the above. This change operation can be easily and quickly performed by the operator of the machine 1 to replace the gasket 5 when worn, even wearing thermal gloves.

Preferably, the annular element 6 and the dispensing body 4 respectively comprise a first opening 60 and a second opening 42 extending transversely to the axial direction X-X in which, in the operating configuration, the pin 11 is inserted so as to fix the angular position of the annular element 6 with respect to the dispensing body 4 around the axial direction X-X (Figure 6). Otherwise, in the maintenance configuration, the pin 11 is extracted from the first and/or second opening 60, 42, leaving the annular element 6 free to rotate relatively with respect to the dispensing body 4 around the axial direction X-X (Figure 3).

According to an aspect shown in Figure 4, the first opening 60 is arranged between the lower and the upper edge 63, 64 of the annular element 6, in particular, preferably, in the vicinity of the upper edge 64.

According to a further aspect shown in Figure 4, the first opening 60 passes through, i.e. extends transversely to the axial direction X-X between an external surface 66 of the annular element 6 and the internal cavity 65.

The second opening 42 formed on the dispensing body 4 can be aligned with the first opening 60 by rotating the annular element 6 with respect to the dispensing body 4. The first and second openings 60, 42, when aligned, allow the insertion of the pin 11 to block the angular position of the annular element 6 with respect to the dispensing body 4.

Referring to Figure 3, the second opening 42 is preferably arranged on the cylindrical portion 40 of the dispensing body 4.

In addition, preferably, the second opening 42 makes a through hole through the cylindrical portion 40 of the dispensing body 4.

The pin 11 comprises a first and a second portion 11a, 11b adapted to be respectively accommodated in the first opening 60 of the annular element 6 and in the second opening 42 of the dispensing body 4.

Preferably, the pin has a sealing element 11c interposed between the first and the second portion 11a, 11b which is adapted to prevent water leaks through the first or the second opening 60, 42.

According to one embodiment, the pin 11 is threaded and has a head portion which is engageable by a special clamping/loosening tool. In this embodiment, the first and second openings 60, 42 are also threaded, so as to be able to make a threaded coupling with the pin 11.

It should be noted that, when the first coupling elements 9 are engaged, one and only one pin 11 is sufficient to fix the annular element 6 to the dispensing body 4; therefore, in a preferred embodiment, the second coupling elements 10 comprise a single pin 11.

It should be noted that, in alternative embodiments, two or more pins 11 may be employed, however, in these alternative embodiments a longer time will be required to switch the annular element 6 between the operating and the maintenance configuration.

To switch the annular element 6 from the operating to the maintenance configuration, the operator must first disengage the second coupling elements - for example, by removing the pin 11 from the respective openings 60, 42 - and, subsequently, rotate the annular element 6 around the axial direction X-X to disengage it from the dispensing body 4 - for example, to bring the slider element 91 to the respective insertion section I.

Otherwise, to switch the annular element 6 from the maintenance configuration to the operating configuration, the operator must engage the first coupling elements 9 - for example, by arranging the slider element 91 in the circumferential section C of the guide 90 - and, subsequently, rotate the annular element 6 around the axial direction X-X and engage the second coupling elements 10 - for example, by inserting the pin 11 in the first and second opening 60, 42 when aligned.

It should be specified that the anchoring and release of the filter holder 3 to the annular element 6 to switch it between dispensing and rest configuration is carried out by means of known anchoring elements adapted to engage with the fins 34 of the filter holder 3.

For example, according to a possible embodiment, the annular element 6 has a helical guide 12 inside which the fins 34 of the filter holder 3 are configured to slide during its switching between the dispensing and rest configuration.

Preferably, the helical guide 12 is made on the annular element 6 at the lower edge 63.

In particular, preferably, the helical guide 12 is made on a portion of the annular element 6 opposite to the guide 90 of the first coupling elements 9 along the axial direction X-X.

In the embodiment shown in Figure 7, the annular element 6 extends along the axial direction X-X between a first coupling portion 61 couplable to the dispensing body 4 by means of the coupling members 8, and a second coupling portion 62 configured to be reversibly engageable with the filter holder 3, for example, by means of the aforementioned helical guide 12.

When the annular element 6 is in the operating configuration, the first coupling portion 61 which, preferably is associated with the upper edge 64, is coupled to the dispensing body 4.

When the filter holder 3 is in the dispensing configuration, the second coupling portion 62, preferably associated with the lower edge 63, is engaged with the filter holder 3, in particular with the fins 34 of the filter holder 3.

## Claims

1. Coffee machine (1) comprising a dispensing unit (2) and a filter holder (3), wherein:
- the filter holder (3) is switchable between a dispensing configuration in which is engaged with the dispensing unit (2) and a rest configuration in which is disengaged from the dispensing unit (2),
- the dispensing unit (2) comprises:
- a dispensing body (4) configured to supply water to the filter holder (3) when the filter holder (3) is in the dispensing configuration,
- a gasket (5) configured to hermetically couple the filter holder (3) to the dispensing body (4) when the filter holder (3) is in the dispensing configuration,
- an annular element (6) configured to connect the filter holder (3) to the dispensing body (4), the annular element (6) being switchable between an operating configuration in which is fixed to the dispensing body (4) engaging the gasket (5) and a maintenance configuration in which is disassembled from the dispensing body (4) disengaging the gasket (5), in the operating configuration the annular element (6) makes a seat (7) with the dispensing body (4), the seat (7) extending along an axial direction (X-X) and being adapted to accommodate the filter holder (3) in the dispensing configuration,
- coupling members (8) configured to fix the annular element (6) to the dispensing body (4) in the operating configuration,
**characterized in that** the coupling members (8) comprise:
- first coupling elements (9) adapted to constrain the annular element (6) to the dispensing body (4) along the axial direction (X-X) and allow the rotation of the annular element (6) with respect to the dispensing body (4) around the axial direction (X-X),
- second coupling elements (10) adapted to constrain the rotation of the annular element (6) with respect to the dispensing body (4) around the axial direction (X-X) in an angular position upon switching of the filter holder (3) between the dispensing configuration and the rest configuration.

2. Machine (1) according to claim 1, wherein the first coupling elements (9) comprise:
- a guide (90) made on the annular element (6) and having a circumferential section (C) extending around the axial direction (X-X),
- at least a slider element (91) obtained on the dispensing body (4) and configured to engage in the guide (90) when the annular element (6) is in the operating configuration.

3. Machine (1) according to claim 2, wherein:
- the circumferential section (C) of the guide (90) comprises two sliding surfaces (90a, 90b) which are opposite each other and spaced apart from a gap (90c) along the axial direction (X-X),
- the slider element (91) being configured to be arranged in the gap (90c) so as to be retained by the sliding surfaces (90a, 90b) along the axial direction (X-X) in opposite directions.

4. Machine (1) according to claim 2 or 3, wherein the guide (90) comprises an insertion section (I) extending transversely to the circumferential section (C), the insertion section (I) being connected to the circumferential section (C).

5. Machine (1) according to any one of the preceding claims, wherein the first coupling elements (9) make a bayonet or threaded connection between the annular element (6) and the dispensing body (4).

6. Machine (1) according to any one of the preceding claims, wherein:
- the second coupling elements (10) comprise a pin (11),
- in the operating configuration the pin (11) extends transversely to the axial direction (X-X), engaging the annular element (6) and the dispensing body (4),
- in the maintenance configuration the pin (11) is disengaged from the annular element (6) and from the dispensing body (4).

7. Machine (1) according to claim 6, wherein:
- the annular element (6) and the dispensing body (4) respectively comprise a first opening (60) and a second opening (42) extending transversely to the axial direction (X-X),
- in the operating configuration the pin (11) is inserted in the first opening (60) and in the second opening (42), fixing the angular position of the annular element (6) with respect to the dispensing body (4) around the axial direction (X-X).

8. Machine (1) according to claim 7, wherein:
- the pin (11) comprises a first portion (11a) and a second portion (11b) adapted to be respectively accommodated in the first opening (60) of the annular element (6) and in the second opening (42) of the dispensing body (4),
- the pin (11) has a sealing element (11c), interposed between the first and the second portion (11a, 11b), adapted to prevent water leaks through the first or the second opening (60, 42).

9. Machine (1) according to claim 7 or 8, wherein:
- the pin (11) is threaded and has a head portion engageable by a clamping/loosening tool,
- the first and/or the second opening (60, 42) is/are threaded.

10. Machine (1) according to any one of the preceding claims, wherein:
- the annular element (6) extends along the axial direction (X-X) between a first coupling portion (61) couplable to the dispensing body (4) by means of the coupling members (8), and a second coupling portion (62) configured to be reversibly engageable with the filter holder (3),
- in the operating configuration the first coupling portion (61) is coupled to the dispensing body (4),
- in the dispensing configuration the second coupling portion (62) is engaged with the filter holder (3).
